# EUROPEAN PATENT SPECIFICATION

(11) **EP 4 051 400 B1**
(45) Date of publication and mention of the grant of the patent: **04.12.2024**
(21) Application number: 20796999.9
(22) Date of filing: 05.10.2020
(51) Int. Cl.: B01D 3/00, F25J 3/02

(54) **INTEGRATION OF CONTAMINANT SEPARATION AND REGASIFICATION SYSTEMS**
INTEGRATION VON SYSTEMEN ZUR SCHADSTOFFABSCHEIDUNG UND WIEDERVERDAMPFUNG
INTÉGRATION DE SYSTÈMES DE SÉPARATION ET DE REGAZÉIFICATION DE CONTAMINANTS

(30) Priority: 30.10.2019 US 201962927757 P
(43) Date of publication of application: 07.09.2022
(73) Proprietor: ExxonMobil Technology and Engineering Company, Spring, TX 77389 (US)
(72) Inventor: MAHER, David, W., Spring, TX 77386 (US); RASMUSSEN, Chad, C., Spring, TX 77379 (US); CONNELL, Richard, Perry, Houston, TX 77009 (US)
(74) Representative: ExxonMobil Chemical Europe LLC
(86) International application number: PCT/US2020/054237
(87) International publication number: WO 2021/086547

(56) References cited:
- US-A- 4 318 723
- US-A1- 2008 087 041
- US-A1- 2010 147 022
- US-A1- 2016 010 917
- THOMAS E R ET AL: "CONCEPTUAL STUDIES FOR CO2/NATURAL GAS SEPARATION USING THE CONTROLLED FREEZE ZONE (CFZ) PROCESS", GAS SEPARATION & PURIFICATION, GUILDFORD, SURREY, GB, vol. 2, 1 June 1988 (1988-06-01), pages 84 - 89, XP001223902, DOI: 10.1016/0950-4214(88)80017-3

## Description

### CROSS REFERENCE TO RELATED APPLICATIONS

This application claims the priority benefit of United States Provisional Patent Application No. 62/927757, filed October 30, 2019, entitled INTEGRATION OF CONTAMINANT SEPARATION AND REGASIFICATION SYSTEMS.

### BACKGROUND

### Fields of Disclosure

The disclosure relates generally to the field of hydrocarbon processing, including fluid handling and separation. More specifically, the disclosure relates to the handling and separation of fluids, with outputs including hydrocarbons in a gaseous state and/or with reduced concentrations of contaminants, such as acid gas, sour gas, and/or flue gas.

### Description of Related Art

This section is intended to introduce various aspects of the art, which may be associated with the present disclosure. This discussion is intended to provide a framework to facilitate a better understanding of particular aspects of the present disclosure. Accordingly, it should be understood that this section should be read in this light, and not necessarily as admissions of prior art.

The production of natural gas hydrocarbons, such as methane and ethane, from a reservoir oftentimes carries with it the incidental production of non-hydrocarbon gases. Such gases include contaminants, such as at least one of carbon dioxide (CO₂), hydrogen sulfide (H₂S), carbonyl sulfide, carbon disulfide and various mercaptans. When a feed stream being produced from a reservoir includes these contaminants mixed with hydrocarbons, the stream is oftentimes referred to as "sour gas."

Many natural gas reservoirs have relatively low percentages of hydrocarbons and relatively high percentages of contaminants. Contaminants may act as a diluent and lower the heat content of hydrocarbons. Some contaminants, like sulfur-bearing compounds, are noxious and may even be lethal. Additionally, in the presence of water some contaminants can become quite corrosive.

It is desirable to remove contaminants from a stream containing hydrocarbons to produce sweet and concentrated hydrocarbons. Specifications for pipeline-quality natural gas typically call for a maximum of 2 to 4% CO₂ and ¼ grain H₂S per 100 scf (4 ppmv) or 5 mg/Nm3 H₂S. Specifications for lower temperature processes, such as natural gas liquefaction plants or nitrogen rejection units, typically specify less than 50 ppm CO₂.

The separation of contaminants from hydrocarbons is difficult, and consequently significant work has been applied to the development of hydrocarbon/contaminant separation methods. These methods can be placed into three general classes: absorption by solvents (physical, chemical, and hybrids), adsorption by solids, and distillation.

Separation by distillation of some mixtures can be relatively simple and, as such, is widely used in the natural gas industry. However, distillation of mixtures of natural gas hydrocarbons, primarily methane, and one of the most common contaminants in natural gas, carbon dioxide, can present significant difficulties. Conventional distillation principles and conventional distillation equipment are predicated on the presence of only vapor and liquid phases throughout the distillation tower. The separation of CO₂ from methane by distillation involves temperature and pressure conditions that result in solidification of CO₂ if a pipeline or better quality hydrocarbon product is desired. The implicated temperatures are cold temperatures typically referred to as cryogenic temperatures (i.e., any temperature of about -40 °C (-40 °F) and lower).

Certain cryogenic distillations can overcome the above-mentioned difficulties. These cryogenic distillations provide the appropriate mechanism to handle the formation and subsequent melting of solids during the separation of solid-forming contaminants from hydrocarbons. The formation of solid contaminants in equilibrium with vapor-liquid mixtures of hydrocarbons and contaminants at particular conditions of temperature and pressure takes place in a controlled freeze zone section of a distillation tower. A lower section of the distillation tower may also help separate the contaminants from the hydrocarbons, but the lower section is operated at a temperature and pressure that does not form solids.

In known cryogenic distillation applications using a controlled freeze zone section, a feed stream is dried and precooled to a temperature of about -51 °C (-60 °F) before introduction to the distillation tower below the controlled freeze zone section and melt tray. The vapor component of the cooled feed stream combines with the vapor rising from the stripping section of the tower and bubbles through the liquid on the melt tray. This serves several beneficial purposes, including: the rising vapor stream is cooled and a portion of the CO₂ is condensed, resulting in a cooler and cleaner gas stream entering the open portion of the controlled freeze zone spray chamber; the rising vapor stream is evenly distributed across the tower cross-section as this stream enters the controlled freeze zone spray chamber; most of the required melt tray heat input is provided via sensible heat from cooling the vapor and latent heat from condensing a portion of the CO₂ in the gas stream; and the melt tray liquid is vigorously mixed, which facilitates melting of solid CO₂ particles falling into the melt tray with the bulk liquid temperature only 1.1 to 1.7 °C (2 to 3°F) above the melting point of CO₂. However, cryogenic distillation applications using a controlled freeze zone section utilize several different mechanisms to reduce temperature of various feed streams. It would be beneficial to provide more efficient cooling mechanisms.

Contamination can also be a challenge following combustion of hydrocarbons (e.g., at a power plant). The burning of hydrocarbons produces "flue gases," which include CO₂, water vapor, sulfur dioxides, and nitrogen oxides. In a post-combustion recapture process, CO₂ is separated and captured from the flue gases that result from the combustion. Procedures to recapture CO₂ from flue gases are similar to absorption-by-solvents procedures to separate CO₂ from sour gas. For example, a "filter" may help trap the CO₂ as the CO₂ travels up a chimney or smokestack. This filter includes a solvent that absorbs CO₂. The solvent may then be heated to generate water vapor and a concentrated stream of CO₂. The concentrated stream of CO₂ may be compressed and/or the temperature of the concentrated stream of CO₂ may be decreased using a heat exchanger. At least a portion of the CO₂ condenses within the heat exchanger, yielding a solid or liquid condensed-phase CO₂ component and a light-gas component. The condensed-phase CO₂ component can then be recovered. However, recovering the CO₂ product from the flue gas using such techniques may be costly due to the high degree of compression that may be involved.

Once CO₂ has been separated from a sour gas feed or recaptured from a flue gas feed, the CO₂ may be injected into a nearby well or storage formation, and/or the CO₂ may be transported (e.g., through a pipeline) to a suitable storage site. However, the CO₂ must first be cooled and/or compressed for storage and/or transport, which requires a great deal of energy. It would be beneficial to provide more efficient CO₂ cooling and/or compression mechanisms.

Many sources of natural gas are in parts of the world that are at great distances from any commercial markets for the gas. When pipeline transportation is not feasible, produced natural gas is often processed into liquefied natural gas (which is called "LNG") for transport to market. The natural gas is thus transported as LNG to locations where the LNG can be used for heating, power generation, or industrial use. LNG is typically stored and/or shipped at temperatures of about -162 °C (-260 °F) and at substantially atmospheric pressure. However, LNG generally cannot be utilized by consumers in the very cold, liquid form. Therefore, to be used as fuel or inserted into market pipelines, LNG must be converted back to a gaseous state for distribution to consumers. The LNG is warmed and/or vaporized in a process known as regasification. Typically, LNG regasification plants are located near sea ports, either on land or on floating vessels, to facilitate receipt of LNG from around the globe. To supply vaporized gas at pipeline temperatures and/or pressures, heat may first be added to the cryogenic LNG stream. The heat may come from a variety of sources, such as: (1) burning the regasified LNG (thus losing the market value of that portion of the gas that is consumed), (2) warm water, (3) warm air, or (4) an industrial exothermic process. It would be beneficial to integrate the regasification of LNG with one or more other industrial processes to more efficiently utilize otherwise-wasted heat energy.

Prior art document US 4318723 A relates to a method of eliminating solids formation in a cryogenic distillative separation of acid gases from methane. The method includes adding a solids-preventing agent to the solids potential zone of the distillation column.

US 2010/0147022 A1 describes a process for removal of sour species from a dehydrated natural gas feed stream. The dehydrated natural gas feed stream is cooled to conditions where a slurry of solid sour species and hydrocarbon liquids is formed together with a gaseous stream containing gaseous sour species. The gaseous stream containing gaseous sour species is then separated from the slurry and treated with a liquid solvent, thereby forming a liquid solution of the sour species and a dehydrated sweetened natural gas product stream.

US 2016/0010917 A1 relates to a method and system for separating fluids in a distillation tower. The method includes feeding a stream to the distillation tower, wherein the stream includes carbon dioxide, reducing a carbon dioxide concentration of the stream received by the rectifier section by feeding a first cryogenic fluid to the controlled freeze zone section and accumulating rectifier section stream in at least one of a holding vessel and a sump of the rectifier section, and terminating reducing the carbon dioxide concentration when the carbon dioxide concentration of the stream travelling from the controlled freeze zone section to the rectifier section is less than or equal to a maximum carbon dioxide concentration.

US 2008/0087041 A1 describes methods and systems for recovery of natural gas liquids (NGL) and a pressurized methane-rich sales gas from liquefied natural gas (LNG). In certain embodiments, LNG passes through a heat exchanger, thereby heating and vaporizing at least a portion of the LNG. The partially vaporized LNG passes to a fractionation column where a liquid stream enriched with ethane plus and a methane-rich vapor stream are withdrawn.

### SUMMARY

The invention relates to an integrated system as defined in claim 1 and to a method as defined in claim 4. Preferred embodiments of the invention are defined in the dependent claims. Embodiments of the disclosure are directed to the integration of hydrocarbon refining processes, including liquefied natural gas ("LNG") regasification processes with processes for separating contaminants from a sour gas and/or flue gas feed streams.

Embodiments of the disclosure are concerned with a process for cryogenically separating contaminants and the regasification of LNG, wherein the two processes utilize or are integrated around common refrigeration equipment and/or fuel gas usage.

Embodiments of the disclosure are concerned with a process for using solvents to separate contaminants and the regasification of LNG, wherein the two processes utilize or are integrated around common refrigeration equipment and/or fuel gas usage.

Embodiments of the disclosure are concerned with an integrated system, including: a component for separating contaminants from an input feed stream; a heat exchanger coupled to a first line, wherein: the first line is coupled to the component for separating contaminants, and the heat exchanger cools a first feed stream of the first line; and a LNG regasification system comprising a vaporizer, wherein: the vaporizer heats a LNG stream of the LNG regasification system, and the heat exchanger functions as the vaporizer. As defined in claims 1 and 4 a second vaporiser is included and the vaporised LNG stream from the second vaporiser serves to dilute carbon dioxide in the output product stream.

Embodiments of the disclosure are concerned with a process, including: separating contaminants from an input feed stream with a component for separating contaminants; cooling a first feed stream with a heat exchanger, wherein the heat exchanger is coupled to the component for separating contaminants; and heating a LNG stream with a vaporizer of a LNG regasification system, wherein the heat exchanger functions as the vaporizer.

The foregoing has broadly outlined the features of the present disclosure in order that the detailed description that follows may be better understood. Additional features will also be described herein.

### BRIEF DESCRIPTION OF THE DRAWINGS

These and other features, aspects and advantages of the disclosure will become apparent from the following description, appending claims and the accompanying drawings, which are briefly described below.
Figure 1 is a schematic diagram of a tower with sections within a single vessel.
Figure 2 is a schematic diagram of a tower with sections within multiple vessels.
Figure 3 is a schematic diagram of a tower with sections within a single vessel.
Figure 4 is a schematic diagram of a tower with sections within multiple vessels.
Figure 5 is a schematic diagram of an LNG regasification system.
Figure 6 is a schematic diagram of an integrated separation and regasification system that represents the invention.
Figure 7 is a schematic diagram of another integrated separation and regasification system.
Figure 8 is a schematic diagram of yet another integrated separation and regasification system.

It should be noted that the figures are merely examples and no limitations on the scope of the present disclosure are intended thereby. Further, the figures are generally not drawn to scale, but are drafted for purposes of convenience and clarity in illustrating various aspects of the disclosure.

### DETAILED DESCRIPTION

For the purpose of promoting an understanding of the principles of the disclosure, reference will now be made to the features illustrated in the drawings and specific language will be used to describe the same. It will nevertheless be understood that no limitation of the scope of the disclosure is thereby intended. Any alterations and further modifications, and any further applications of the principles of the disclosure as described herein are contemplated as would normally occur to one skilled in the art to which the disclosure relates. It will be apparent to those skilled in the relevant art that some features that are not relevant to the present disclosure may not be shown in the drawings for the sake of clarity.

As referenced in this application, the terms "stream," "gas stream," "vapor stream," and "liquid stream" refer to different stages of one or more feed streams as the feed streams are processed (e.g., in a distillation tower that separates methane, the primary hydrocarbon in natural gas, from contaminants). Although the phrases "gas stream," "vapor stream," and "liquid stream," may refer to situations where gas, vapor, or liquid is primarily present in the stream, respectively, there may be other phases also present within the stream. For example, a gas may also be present in a "liquid stream." In some instances, the terms "gas stream" and "vapor stream" may be used interchangeably.

The term "natural gas" refers to a multi-component gas obtained from a crude oil well (associated gas) or from a subterranean gas-bearing formation (non-associated gas). The composition and pressure of raw natural gas can vary significantly. A typical natural gas stream contains methane (C₁ carbon content) as a significant component. Raw natural gas may also contain ethane (C₂ carbon content), higher molecular weight hydrocarbons, acid gases (such as carbon dioxide, hydrogen sulfide, carbonyl sulfide, carbon disulfide, and mercaptans), and minor amounts of contaminants such as water, nitrogen, iron sulfide, wax, and crude oil. As used herein, natural gas includes gas resulting from the regasification of a liquefied natural gas ("LNG"), which has been purified to remove contaminants, such as water, acid gases, and most of the higher molecular weight hydrocarbons.

A "heat exchanger," as referenced herein, broadly means any device capable of transferring heat from one medium to another medium, including particularly any structure, e.g., any device, commonly referred to as a heat exchanger. Heat exchangers include "direct heat exchangers" and "indirect heat exchangers." Thus, a heat exchanger may be a plate-and-frame, shell-and-tube, spiral, hairpin, core, core-and-kettle, double-pipe, or any other type of known heat exchanger. "Heat exchanger" may also refer to any column, tower, unit, or other arrangement adapted to allow the passage of one or more streams therethrough, and to affect direct or indirect heat exchange between one or more lines of refrigerant, and one or more feed streams.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numeral ranges provided. Accordingly, these terms should be interpreted as indicating that insubstantial or inconsequential modifications or alterations of the subject matter described are considered to be within the scope of the disclosure.

The articles "the," "a," and "an" are not necessarily limited to mean only one, but rather are inclusive and open ended so as to include, optionally, multiple such elements.

One of the many potential advantages of the embodiments of the present disclosure is that temperature control resources may be shared by multiple processes, reducing both expense and environmental impact. Other potential advantages include one or more of the following, among others that will be apparent to the skilled artisan with the benefit of this disclosure: reduction and/or elimination of independent refrigeration equipment for a cryogenic-distillation application using a controlled freeze zone section; reduction and/or elimination of independent refrigeration equipment for solvent-absorption application; and reduction and/or elimination of independent vaporization equipment for a LNG regasification system. Embodiments of the present disclosure can thereby be useful in the recovery and/or refinement of hydrocarbons from subsurface formations.

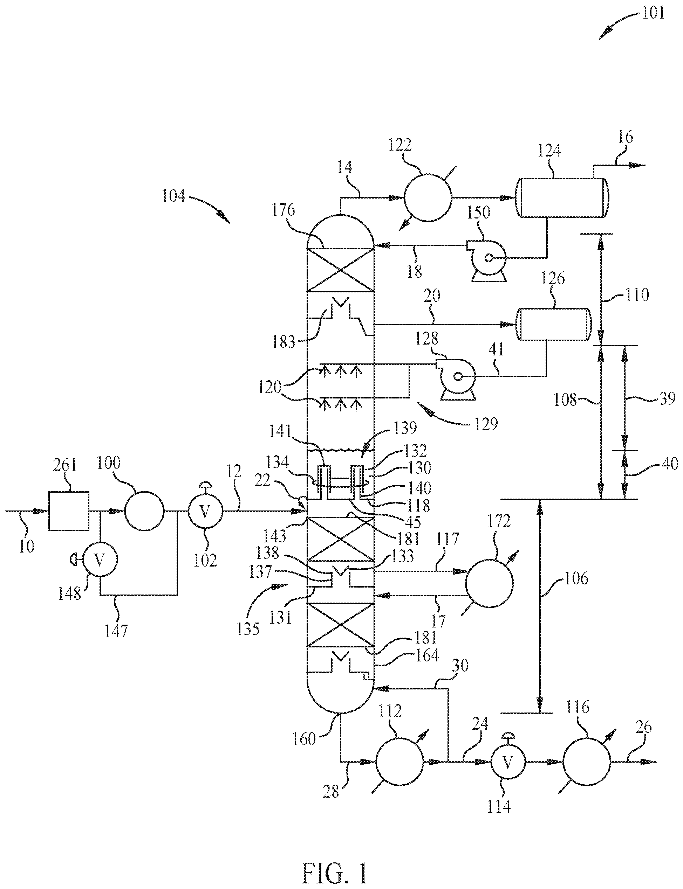

Portions of this disclosure relate to systems and methods for separating a feed stream in a distillation tower. Such systems and methods help optimally match where the feed stream enters the distillation tower based on the concentrations of components in the feed stream so as to improve energy efficiency and/or optimally size the distillation tower. The systems and methods may also help prevent the undesired accumulation of solids in the controlled freeze zone section of the distillation tower. Figures 1-4 of the disclosure display various aspects of such systems and methods.

Systems and methods may separate methane from contaminants in sour gas and/or flue gas feed streams (e.g., a gas having a CO₂ concentration of about 10% to about 80%). Exemplary separation systems **101, 201, 301, 401** may comprise a distillation tower **104, 204** (Figures 1-4). The separation systems **101, 201, 301, 401** may prepare the feed stream (e.g., sour gas and/or flue gas feed streams), and the distillation tower **104, 204** may then separate the contaminants from the methane.

The distillation tower **104, 204** may be separated into three functional sections: a lower section **106,** a middle controlled freeze zone section **108,** and an upper section **110.** The distillation tower **104, 204** may incorporate three functional sections when the upper section **110** is needed and/or desired.

The distillation tower **104, 204** may incorporate only two functional sections when the upper section **110** is not needed and/or desired. When the distillation tower does not include an upper section **110,** a portion of vapor leaving the middle controlled freeze zone section **108** may be condensed in a condenser **122** and returned as a liquid stream via a spray assembly **129.** Moreover, lines **18** and **20** may be eliminated, elements **124** and **126** may be one and the same, and elements **150** and **128** may be one and the same. The stream in line **14,** now taking the vapors leaving the middle controlled freeze section **108,** directs these vapors to the condenser **122.**

The lower section **106** may also be referred to as a stripper section. The middle controlled freeze zone section **108** may also be referred to as a controlled freeze zone section. The upper section **110** may also be referred to as a rectifier section.

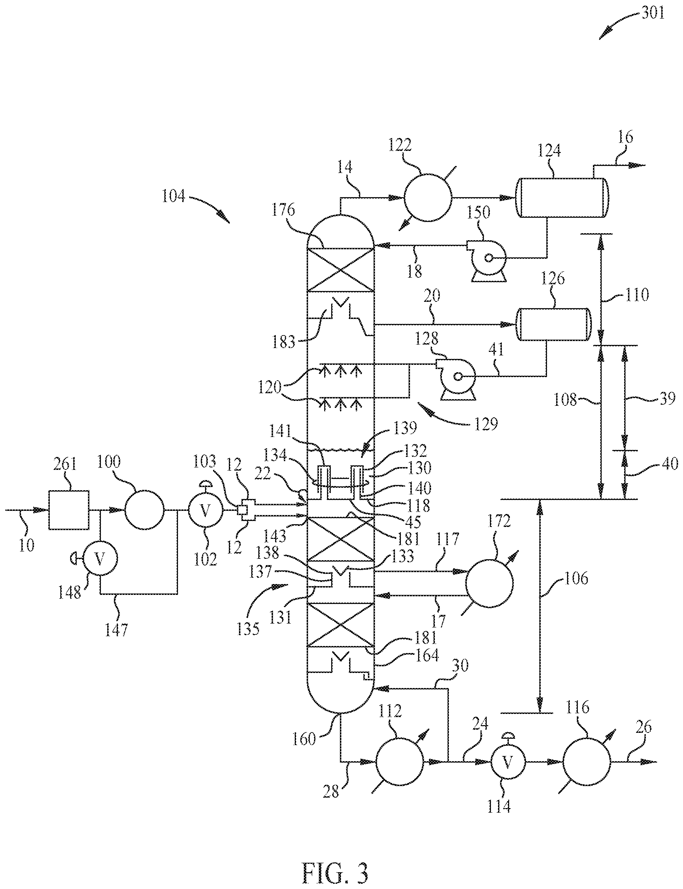

The sections of the distillation tower **104** may be housed within a single vessel (Figures 1 and 3). For example, the lower section **106,** the middle controlled freeze zone section **108,** and the upper section **110** may be housed within a single vessel **164.**

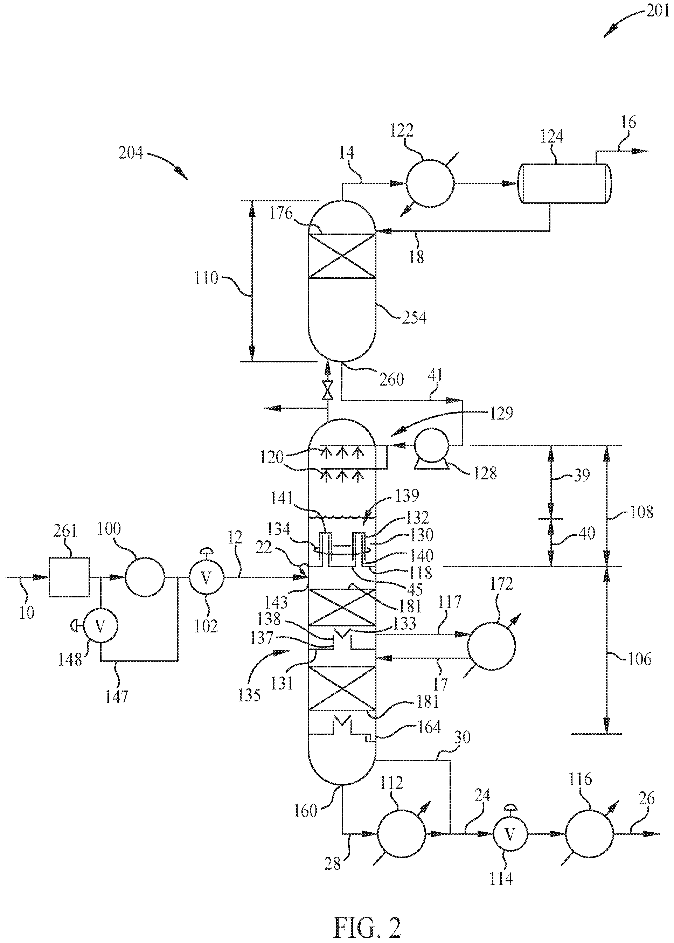

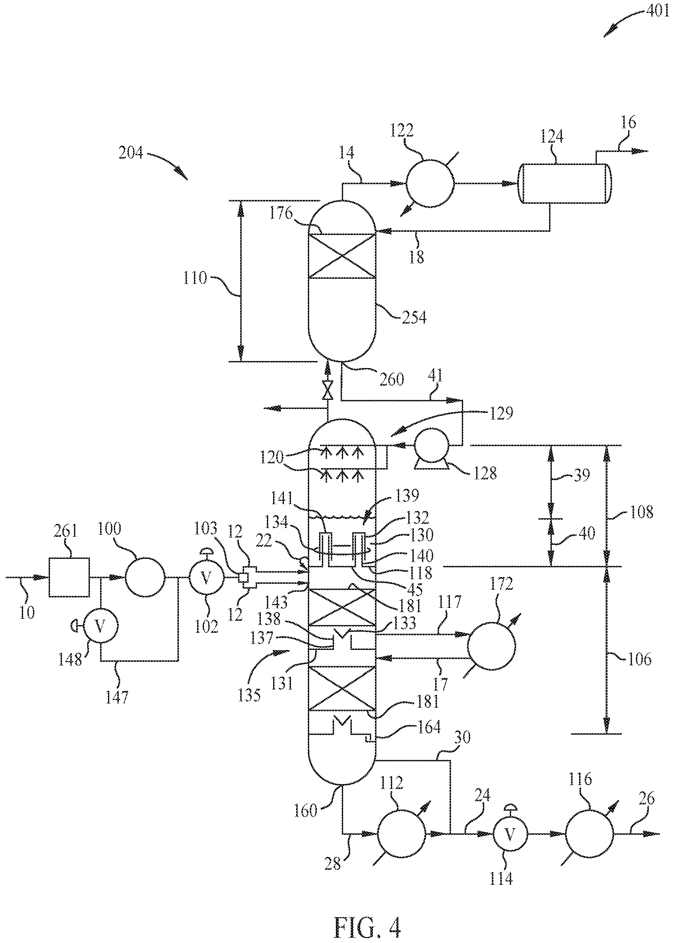

The sections of the distillation tower **204** may be housed within a plurality of vessels to form a split-tower configuration (Figures 2 and 4). Each of the vessels may be separate from the other vessels. Piping and/or another suitable mechanism may connect one vessel to another vessel. In this instance, the lower section **106,** middle controlled freeze zone section **108,** and upper section **110** may be housed within two or more vessels. For example, as shown in Figures 2 and 4, the upper section **110** may be housed within a single vessel **254,** and the lower and middle controlled freeze zone sections **106, 108** may be housed within a single vessel **164.** When this is the case, a liquid stream exiting the upper section **110** may exit through a liquid outlet bottom **260.** The liquid outlet bottom **260** is at the bottom of the upper section **110.** Although not shown, each of the sections may be housed within its own separate vessel, one or more section may be housed within separate vessels, or the upper and middle controlled freeze zone sections may be housed within a single vessel while the lower section may be housed within a single vessel, etc. When sections of the distillation tower are housed within vessels, the vessels may be side-by-side along a horizontal line and/or above each other along a vertical line.

The split-tower configuration may be beneficial in situations where the height of the distillation tower, motion considerations, and/or transportation issues, such as for remote locations, should be considered. This split-tower configuration allows for the independent operation of one or more sections. For example, when the upper section is housed within a single vessel and the lower and middle controlled freeze zone sections are housed within a single vessel, independent generation of reflux liquids using a substantially contaminant-free, largely hydrocarbon stream from a packed gas pipeline or an adjacent hydrocarbon line, may occur in the upper section. The reflux may be used to cool the upper section, establish an appropriate temperature profile in the upper section, and/or build up liquid inventory at the bottom of the upper section to serve as an initial source of spray liquids for the middle controlled freeze zone section. Moreover, the middle controlled freeze zone and lower sections may be independently prepared by chilling the feed stream, feeding the feed stream to the optimal location (be that in the lower section or in the middle controlled freeze zone section), generating liquids for the lower and the middle controlled freeze zone sections, and disposing the vapors off the middle controlled freeze zone section while the vapors are off specification with too high a contaminant content. Also, liquid from the upper section may be intermittently or continuously sprayed, building up liquid level in the bottom of the middle controlled freeze zone section and bringing the contaminant content in the middle controlled freeze zone section down and near steady state level so that the two vessels may be connected to send the vapor stream from the middle controlled freeze zone section to the upper section, continuously spraying liquid from the bottom of the upper section into the middle controlled freeze zone section and stabilizing operations into steady state conditions. The split tower configuration may utilize a sump of the upper section as a liquid receiver for the pump 128, therefore obviating the need for a holding vessel **126** in Figures 1 and 3.

The system may also include a heat exchanger **100** (Figures 1-4). A feed stream **10** (e.g., a sour gas feed stream, a flue gas feed stream) may enter the heat exchanger **100** before entering the distillation tower **104, 204.** For example, feed stream **10** may be a feed stream from a reservoir, or feed stream **10** may be from an outlet of a gas plant. The feed stream **10** may be cooled within the heat exchanger **100.** The heat exchanger **100** helps drop the temperature of the feed stream **10** to a level suitable for introduction into the distillation tower **104, 204.**

The system may include an expander device **102** (Figures 1-4). The feed stream **10** may enter the expander device **102** before entering the distillation tower **104, 204.** The feed stream **10** may be expanded, and thereby further cooled, in the expander device **102** after exiting the heat exchanger **100.** The expander device **102** helps drop the temperature of the feed stream **10** to a level suitable for introduction into the distillation tower **104, 204.** The expander device **102** may be any suitable device, such as a valve. If the expander device **102** is a valve, the valve may be any suitable valve that may aid in cooling the feed stream **10** before the feed stream enters the distillation tower **104, 204.** For example, the valve may comprise a Joule-Thompson (J-T) valve.

The system may include a feed separator **103** (Figures 3-4). The feed stream may enter the feed separator before entering the distillation tower **104, 204.** The feed separator may separate a feed stream having a mixed liquid and vapor stream into a liquid stream and a vapor stream. Lines **12** may extend from the feed separator to the distillation tower **104, 204.** One of the lines **12** may receive the vapor stream from the feed separator. Another one of the lines **12** may receive the liquid stream from the feed separator. Each of the lines **12** may extend to the same and/or different sections (i.e., middle controlled freeze zone and lower sections) of the distillation tower **104, 204.** The expander device **102** may or may not be downstream of the feed separator **103.** The expander device **102** may comprise a plurality of expander devices **102** such that each line **12** has an expander device **102.**

The system may include a dehydration unit **261** (Figures 1-4). The feed stream **10** may enter the dehydration unit **261** before entering the distillation tower **104, 204.** The feed stream **10** enters the dehydration unit **261** before entering the heat exchanger **100** and/or the expander device **102.** The dehydration unit **261** removes water from the feed stream **10** to prevent water from later presenting a problem in the heat exchanger **100,** expander device **102,** feed separator **103,** or distillation tower **104, 204.** The water can present a problem by forming a separate water phase (i.e., ice and/or hydrate) that plugs lines or equipment or negatively affects the distillation process. The dehydration unit **261** dehydrates the feed stream to a dew point sufficiently low to ensure a separate water phase does not form at any point downstream during the rest of the process. The dehydration unit may be any suitable dehydration mechanism, such as a molecular sieve or a glycol dehydration unit.

The system may include a filtering unit (not shown). The feed stream **10** may enter the filtering unit before entering the distillation tower **104, 204.** The filtering unit may remove undesirable contaminants from the feed stream before the feed stream enters the distillation tower **104, 204.** Depending on what contaminants are to be removed, the filtering unit may be before or after the dehydration unit **261** and/or before or after the heat exchanger **100.**

The system may include lines **12.** Each of the lines may be referred to as an inlet line **12.** The feed stream is introduced into the distillation tower **104, 204** through one of the lines **12.** One or more lines **12** may extend to the lower section **106** or the middle controlled freeze zone section **108** of the distillation tower **104, 204** to another of the lines **12.** For example, the line **12** may extend to the lower section **106** such that the feed stream **10** may enter the lower section **106** of the distillation tower **104, 204** (Figures 1-4). Each line **12** may directly or indirectly extend to the lower section **106** or the middle controlled freeze zone section **108.** Each line **12** may extend to an outer surface of the distillation tower **104, 204** before entering the distillation tower.

If the system includes the feed separator **103** (Figures 3-4), the line **12** may comprise a plurality of lines **12.** Each line may be the same line as one of the lines that extends from the feed separator to a specific portion of the distillation tower **104, 204.**

Before entering the distillation tower **104, 204,** a sample of the feed stream **10** may enter an analyzer (not shown). The sample of the feed stream **10** may be a small sample of the feed stream **10.** The feed stream **10** may comprise feed from multiple feed sources or feed from a single feed source. Each feed source may comprise, for example, a separate reservoir, one or more wellbores within one or more reservoirs, etc. The analyzer may determine the percentage of CO₂ in the sample of the feed stream **10** and, therefore, the content of CO₂ in the feed stream **10.** The analyzer may connect to multiple lines **12** so that the feed stream **10** can be sent to one or more sections **106, 108** of the distillation tower **104, 204** after the sample of the feed stream **10** exits the analyzer. If the analyze determines that the percentage of CO₂ is greater than about 20% or greater than 20%, the analyzer may direct the feed stream to the line **12** extending from the lower section **106.** If the analyzer determines that the percentage of CO₂ is less than about 20% or less than 20%, the analyzer may direct the feed stream to the line **12** extending from the middle controlled freeze zone section **108.** The analyzer may be any suitable analyzer. For example, the analyzer may be a gas chromatograph or an infrared (IR) analyzer. The analyzer may be positioned before the feed stream **10** enters the heat exchanger **100.** The feed stream **10** entering the analyzer may be a single phase.

While the feed stream **10** may be introduced into any section of the distillation tower **104, 204** regardless of the percentage of CO₂ in the feed stream **10,** it is more efficient to introduce the feed stream **10** into the section of the distillation tower **104, 204** that will employ the best use of energy. For this reason, it is preferable to introduce the feed stream to the lower section **106** when the percentage of CO₂ in the feed stream is greater than any percentage about 20% or greater than 20% and to the middle controlled freeze zone section **108** when the percentage of CO₂ in the feed stream is any percentage less than about 20% or less than 20%.

The feed stream may be directly or indirectly fed to one of the sections **106, 108.** Thus, for the best use of energy it may be best to introduce the feed stream into the distillation tower **104, 204** at the point in the distillation process of the distillation tower **104, 204** that matches the relevant percentage or content of CO₂ in the feed stream.

The feed stream **10** may enter a feed separator **103.** The feed separator **103** separates a feed stream vapor portion from a feed stream liquid portion before the feed stream is introduced into the distillation tower **104, 204.** The feed stream vapor portion may be fed to a different section or portion within a section of the distillation tower **104, 204** than the feed stream liquid portion. For example, the feed stream vapor portion may be fed to an upper controlled freeze zone section **39** of the middle controlled freeze zone section **108,** and/or the feed stream liquid portion may be fed to a lower controlled freeze zone section **40** of the middle controlled freeze zone section **108** or to the lower section **106** of the distillation tower.

The lower section **106** is constructed and arranged to separate the feed stream **10** into an enriched contaminant bottom liquid stream (i.e., liquid stream) and a freezing zone vapor stream (i.e., vapor stream). The lower section **106** separates the feed stream at a temperature and pressure at which no solids form. The liquid stream may comprise a greater quantity of contaminants than of methane. The vapor stream may comprise a greater quantity of methane than of contaminants. In any case, the vapor stream is lighter than the liquid stream. As a result, the vapor stream rises from the lower section **106,** and the liquid stream falls to the bottom of the lower section **106.**

The lower section **106** may include and/or connect to equipment that separates the feed stream. The equipment may comprise any suitable equipment for separating methane from contaminants, such as one or more packed sections **181,** or one or more distillation trays with perforations, downcomers and/or weirs (Figures 1-4).

The equipment may include components that apply heat to the stream to form the vapor stream and the liquid stream. For example, the equipment may comprise a first reboiler **112** that applies heat to the stream. The first reboiler **112** may be located outside of the distillation tower **104, 204.** The equipment may also comprise a second reboiler **172** that applies heat to the stream. The second reboiler **172** may be located outside of the distillation tower **104, 204.** Line **117** may lead from the distillation tower to the second reboiler **172.** Line **17** may lead from the second reboiler **172** to the distillation tower. Additional reboilers, set up similarly to the second reboiler described above, may also be used.

The first reboiler **112** may apply heat to the liquid stream that exits the lower section **106** through a liquid outlet **160** of the lower section **106.** The liquid stream may travel from the liquid outlet **160** through line **28** to reach the first reboiler **112** (Figures 1-4). The amount of heat applied to the liquid stream by the first reboiler **112** can be increased to separate more methane from contaminants. The more heat applied by the reboiler **112** to the stream, the more methane separated from the liquid contaminants, though more contaminants will also be vaporized.

The first reboiler **112** may apply heat to the stream within the distillation tower **104, 204.** Specifically, the heat applied by the first reboiler **112** warms up the lower section **106.** This heat travels up the lower section **106** and supplies heat to warm solids entering a melt tray assembly **139** (Figures 1-4) of the middle controlled freeze zone section **108** so that the solids form a liquid and/or slurry mix.

The second reboiler **172** applies heat to the stream within the lower section **106.** This heat is applied closer to the middle controlled freeze zone section **108** than the heat applied by the first reboiler **112.** As a result, the heat applied by the second reboiler **172** reaches the middle controlled freeze zone section **108** faster than the heat applied by the first reboiler **112.** The second reboiler **172** also helps with energy integration.

The equipment may include one or more chimney assemblies **135** (Figures 1-4). While falling to the bottom of the lower section **106,** the liquid stream may encounter one or more of the chimney assemblies **135.**

Each chimney assembly **135** includes a chimney tray **131** that collects the liquid stream within the lower section **106.** The liquid stream that collects on the chimney tray **131** may be fed to the second reboiler **172.** After the liquid stream is heated in the second reboiler **172,** the stream may return to the middle controlled freeze zone section **108** to supply heat to the middle controlled freeze zone section **108** and/or the melt tray assembly **139.** An unvaporized stream exiting the second reboiler **172** may be fed back to the distillation tower **104, 204** below the chimney tray **131.** A vapor stream exiting the second reboiler **172** may be routed under or above the chimney tray **131** when the vapor stream enters the distillation tower **104, 204.**

The chimney tray **131** may include one or more chimneys **137.** The chimney **137** serves as a channel that the vapor stream in the lower section **106** traverses. The vapor stream travels through an opening in the chimney tray **131** at the bottom of the chimney **137** to the top of the chimney **137.** The opening is closer to the bottom of the lower section **106** than it is to the bottom of the middle controlled freeze zone section **108.** The top is closer to the bottom of the middle controlled freeze zone section **108** than it is to the bottom of the lower section **106.**

Each chimney **137** has an attached chimney cap **133.** The chimney cap **133** covers a chimney top opening **138** of the chimney **137.** The chimney cap **133** prevents the liquid stream from entering the chimney **137.** The vapor stream exits the chimney assembly **135** via the chimney top opening **138.**

After falling to the bottom of the lower section **106,** the liquid stream exits the distillation tower **104, 204** through the liquid outlet **160.** The liquid outlet **160** is within the lower section **106** (Figures 1-4). The liquid outlet **160** may be located at the bottom of the lower section **106.**

After exiting through the liquid outlet **160,** the feed stream may travel via line **28** to the first reboiler **112.** The feed stream may be heated by the first reboiler **112,** and vapor may then re-enter the lower section **106** through line **30.** Unvaporized liquid may continue out of the distillation process via line **24.**

The systems may include an expander device **114** (Figures 1-4). After entering line **24,** the heated liquid stream may be expanded in the expander device **114.** The expander device **114** may be any suitable device, such as a valve. The valve **114** may be any suitable valve, such as a J-T valve.

The system may include a heat exchanger **116** (Figures 1-4). The liquid stream heated by the first reboiler **112** may be cooled or heated by the heat exchanger **116.** The heat exchanger **116** may be a direct heat exchanger or an indirect heat exchanger. The heat exchanger **116** may comprise any suitable heat exchanger. After exiting the heat exchanger **116,** the liquid stream exits the distillation process via line **26.**

The vapor stream in the lower section **106** rises from the lower section **106** to the middle controlled freeze zone section **108.** The middle controlled freeze zone section **108** is constructed and arranged to separate the feed stream **10** introduced into the middle controlled freeze zone section, or into the top of lower section **106,** into a solid and a vapor stream. The middle controlled freeze zone section **108** forms a solid, which may comprise more of contaminants than of methane. The vapor stream (i.e., methane-enriched vapor stream) may comprise more methane than contaminants.

The middle controlled freeze zone section **108** includes a lower section **40** and an upper section **39.** The lower section **40** is below the upper section **39.** The lower section **40** directly abuts the upper section **39.** The lower section **40** is primarily but not exclusively a heating section of the middle controlled freeze zone section **108.** The upper section **39** is primarily but not exclusively a cooling section of the middle controlled freeze zone section **108.** The temperature and pressure of the upper section **39** are chosen so that the solid can form in the middle controlled freeze zone section **108.**

The middle controlled freeze zone section **108** may comprise a melt tray assembly **139** that is maintained in the middle controlled freeze zone section **108** (Figures 1-4). The melt tray assembly **139** is within the lower section **40** of the middle controlled freeze zone section **108.** The melt tray assembly **139** is not within the upper section **39** of the middle controlled freeze zone section **108.**

The melt tray assembly **139** is constructed and arranged to melt solids formed in the middle controlled freeze zone section **108.** When the warm vapor stream rises from the lower section **106** to the middle controlled freeze zone section **108,** the vapor stream immediately encounters the melt tray assembly **139** and supplies heat to melt the solids. As shown in Figures 1-4, the melt tray assembly **139** may comprise at least one of a melt tray **118,** a bubble cap **132,** a liquid **130,** one or more draw-off openings, one or more return inlets, and optionally may include a heat mechanism(s) **134.**

The melt tray **118** may collect a liquid and/or slurry mix. The melt tray **118** divides at least a portion of the middle controlled freeze zone section **108** from the lower section **106.** The melt tray **118** is at the bottom **45** of the middle controlled freeze zone section **108.**

One or more bubble caps **132** may act as a channel for the vapor stream rising from the lower section **106** to the middle controlled freeze zone section **108.** The bubble cap **132** may provide a path for the vapor stream up a riser **140** and then down and around the riser **140** to the melt tray **118.** The riser **140** is covered by a cap **141.** The cap **141** prevents the liquid **130** from travelling into the riser and also helps prevent solids from travelling into the riser **140.** The vapor stream's traversal through the bubble cap **132** allows the vapor stream to transfer heat to the liquid **130** within the melt tray assembly **139.**

One or more heat mechanisms **134** may further heat up the liquid **130** to facilitate melting of the solids into a liquid and/or slurry mix. The heat mechanism(s) **134** may be located anywhere within the melt tray assembly **139.** For example, as shown in Figures 1-4, a heat mechanism **134** may be located around bubble caps **132.** The heat mechanism **134** may be any suitable mechanism, such as a heat coil. The heat source of the heat mechanism **134** may be any suitable heat source.

The liquid **130** in the melt tray assembly is heated by the vapor stream. The liquid **130** may also be heated by the one or more heat mechanisms **134.** The liquid **130** helps melt the solids formed in the middle controlled freeze zone section **108** into a liquid and/or slurry mix. Specifically, the heat transferred by the vapor stream heats up the liquid, thereby enabling the heat to melt the solids. The temperature of the liquid **130** may be at a level sufficient to melt the solids.

The heat duty cycle for heat exchanger **100** may be maximized to provide the most efficient operation. As a precaution, a feed gas bypass line **147** and a bypass valve **148** may be used to permit the feed gas **10** to bypass the heat exchanger **100,** thereby increasing the temperature of the feed gas. This option may be used if feed gas risers, which introduce feed gas above the liquid level of liquid **130,** experience fouling from solid CO₂ in a low CO₂ environment.

The middle controlled freeze zone section **108** may also comprise a spray assembly **129.** The spray assembly **129** cools the vapor stream that rises from the lower section 40. The spray assembly **129** sprays liquid, which is cooler than the vapor stream, on the vapor stream to cool the vapor stream. The spray assembly **129** is within the upper section **39.** The spray assembly **129** is not within the lower section **40.** The spray assembly **129** is above the melt tray assembly **139.** In other words, the melt tray assembly **139** is below the spray assembly **129.**

The spray assembly **129** includes one or more spray nozzles **120** (Figures 1-4). Each spray nozzle **120** sprays liquid on the vapor stream. The spray assembly **129** may also include a spray pump **128** (Figures 1-4) that pumps the liquid. Instead of a spray pump **128,** gravity may induce flow in the liquid.

The liquid sprayed by the spray assembly **129** contacts the vapor stream at a temperature and pressure at which solids form. Solids, containing mainly contaminants, form when the sprayed liquid contacts the vapor stream. The solids fall toward the melt tray assembly **139.**

The temperature in the middle controlled freeze zone section **108** cools down as the vapor stream travels from the bottom of the middle controlled freeze zone section **108** to the top of the middle controlled freeze zone section **108.** The methane in the vapor stream rises from the middle controlled freeze zone section **108** to the upper section **110.** Some contaminants may remain in the methane and also rise. The contaminants in the vapor stream tend to condense or solidify with the colder temperatures and fall to the bottom of the middle controlled freeze zone section **108.**

The solids form the liquid and/or slurry mix when in the liquid **130.** The liquid and/or slurry mix flows from the middle controlled freeze zone section **108** to the lower section **106.** At least part of the liquid and/or slurry mix flows from the bottom of the middle controlled freeze zone section **108** to the top of the lower section **106** via a line **22** (Figures 1-4). The line **22** may be an exterior line. The line **22** may extend from the distillation tower **104, 204.** The line **22** may extend from the middle controlled freeze zone section **108.** The line may extend to the lower section **106.** The line **22** may extend from an outer surface of the distillation tower **104, 204.**

As shown in Figures 1-4, the vapor stream that rises in the middle controlled freeze zone section **108** and does not form solids or otherwise fall to the bottom of the middle controlled freeze zone section **108,** rises to the upper section **110.** The upper section **110** operates at a temperature, pressure, and contaminant concentration at which no solid forms. The upper section **110** is constructed and arranged to cool the vapor stream to separate the methane from the contaminants. Reflux in the upper section **110** cools the vapor stream. The reflux is introduced into the upper section **110** via line **18.** Line **18** may extend to the upper section **110.** Line **18** may extend from an outer surface of the distillation tower **104, 204.**

After contacting the reflux in the upper section **110,** the feed stream forms a vapor stream and a liquid stream. The vapor stream mainly comprises methane. The liquid stream comprises relatively more contaminants. The vapor stream rises in the upper section **110,** and the liquid falls to a bottom of the upper section **110.**

To facilitate separation of the methane from the contaminants when the stream contacts the reflux, the upper section **110** may include one or more mass transfer devices **176.** Each mass transfer device **176** helps separate the methane from the contaminants. Each mass transfer device **176** may comprise any suitable separation device, such as a tray with perforations, or a section of random or structured packing to facilitate contact of the vapor and liquid phases.

After rising, the vapor stream may exit the distillation tower **104, 204** through line **14.** The line **14** may emanate from an upper part of the upper section **110.** The line **14** may extend from an outer surface of the upper section **110.** From line **14,** the vapor stream may enter a condenser **122** (e.g., a heat exchanger). The condenser **122** cools the vapor stream to form a cooled stream. The condenser **122** at least partially condenses the stream. After exiting the condenser **122,** the cooled stream may enter a separator **124.** The separator **124** separates the vapor stream into liquid and vapor streams. The separator may be any suitable separator that can separate a stream into liquid and vapor streams, such as a reflux drum. Once separated, the vapor stream may exit the separator **124** as output product. The output product may travel through line **16** for subsequent sale to a pipeline and/or condensation to LNG. Once separated, the liquid stream may return to the upper section **110** through line **18** as the reflux. The reflux may travel to the upper section **110** via any suitable mechanism, such as a reflux pump **150** (Figures 1 and 3) or gravity (Figures 2 and 4).

The liquid stream (i.e., freezing zone liquid stream) that falls to the bottom of the upper section **110** collects at the bottom of the upper section **110.** The liquid may collect on tray **183** (Figures 1 and 3) or at the bottommost portion of the upper section **110** (Figures 2 and 4). The collected liquid may exit the distillation tower **104, 204** through line **20** (Figures 1 and 3) or liquid outlet bottom **260** (Figures 2 and 4). The line **20** may emanate from the upper section **110.** The line **20** may emanate from a bottom end of the upper section **110.** The line **20** may extend from an outer surface of the upper section **110.**

The line **20** and/or liquid outlet bottom **260** connects to a line **41.** The line **41** leads to the spray assembly **129** in the middle controlled freeze zone section **108.** The line **41** emanates from the holding vessel **126** (Figures 1 and 3). The line **41** may extend to an outer surface of the middle controlled freeze zone section **108.**

The line **20** and/or liquid outlet bottom **260** may directly or indirectly (Figures 1-4) connect to the line **41.** When the line **20** and/or liquid outlet bottom **260** directly connects to the line **41,** the liquid spray may be pumped to the spray nozzle(s) **120** via any suitable mechanism, such as the spray pump **128** or gravity. When the line **20** and/or liquid outlet bottom **260** indirectly connects to the line **41,** the lines **20**, 41 and/or liquid outlet bottom **260** and line **41** may directly connect to a holding vessel **126** (Figures 1 and 3). The holding vessel **126** may house at least some of the liquid spray before the liquid is sprayed by the nozzle(s). The liquid spray may be pumped from the holding vessel **126** to the spray nozzle(s) **120** via any suitable mechanism, such as the spray pump **128** (Figures 1-4) or gravity. The holding vessel **126** may be needed when there is not a sufficient amount of liquid stream at the bottom of the upper section **110** to feed the spray nozzles **120.**

It should be appreciated that various components of separation systems **101, 201, 301, 401** act to reduce temperatures of feed streams thereof. Such components include heat exchanger **100** and condenser **122.** For example, heat exchanger **100** may drop the temperature of the feed stream **10** before feed stream **10** enters the distillation tower **104, 204.** As another example, the vapor stream from line **14** may enter condenser **122,** which cools the vapor stream and at least partially condenses the stream. After exiting the condenser **122,** the cooled vapor stream may enter a separator **124.** Each such temperature-reduction component may utilize a cooling fluid stream to provide a heat sink to reduce the temperature of the respective feed stream.

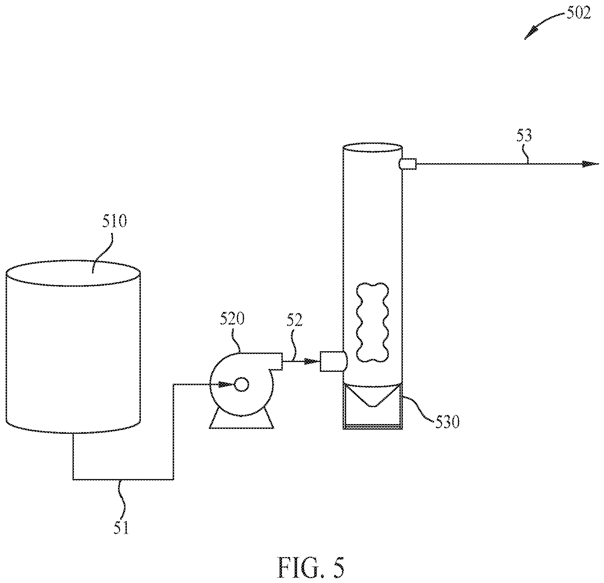

Portions of this disclosure relate to systems and methods for regasification of LNG. A simplified diagram of an LNG regasification system **502** is illustrated in Figure 5. Generally, regasification converts LNG from liquid state to gaseous state. As illustrated, regasification system **502** includes a storage tank **510** (e.g., a tank on land, on a ship, or on a railcar), a pump **520** (e.g., a high pressure pump), and a vaporizer **530.** A regasification process generally transfers liquid-state LNG from the storage tank **510** to the vaporizer **530** by action of pump **520.** For example, pump **520** draws liquid-state LNG from storage tank **510** through line **51.** The liquid-state LNG in line **51** may be at a temperature in a range from about -270 °F to about -250 °F, or more particularly at a temperature of about -162 °C (-260 °F). Pump **520** then directs the liquid-state LNG to vaporizer **530** through line **52.** At vaporizer **530,** a source of heat (e.g., a heat exchanger) is used to regasify the liquid-state LNG. Vaporizer **530** converts the LNG into a gaseous state by heating at a temperature greater than about -100 °C, or possibly greater than about -50 °C. For example, ambient air or seawater may be utilized to heat the LNG into a gaseous state. The gaseous-state LNG (or simply "natural gas") may be at a temperature above about -100 °C, or possibly of about -45.5 °C (-50 °F). The natural gas may be delivered through line **53** to be consumed or stored.

Some embodiments provide integrated systems and methods for separating contaminants from gas feed streams (e.g., sour gas, flue gas) and for regasification of LNG. Integration may lower costs, reduce complexity, reduce geographic footprint, reduce waste, improve overall return on investment, improve scalability, and/or provide redundancy and resilience for hydrocarbon processing operations. It is currently believed that the cost of operating a cryogenic distillation tower using a controlled freeze zone section may be reduced by about 25% to about 75% by integrating the refrigeration systems with an LNG regasification system.

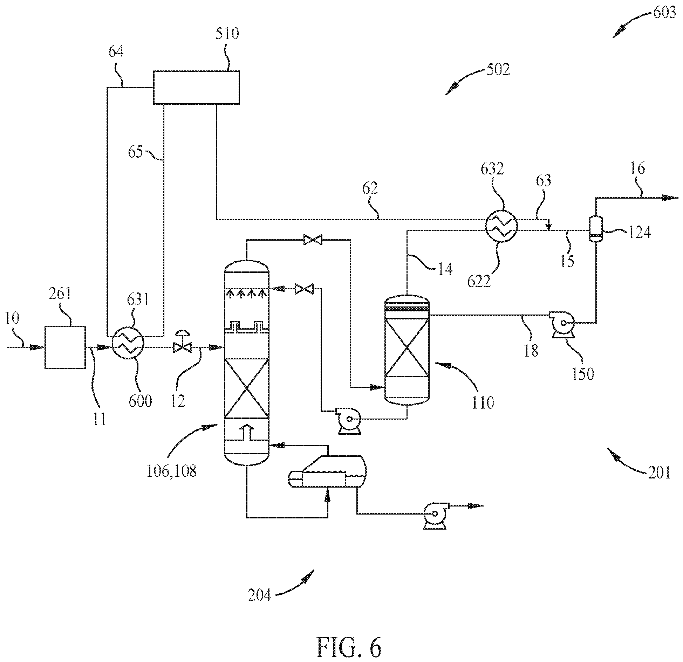

Figure 6 illustrates an exemplary integrated separation and regasification claimed system **603.** As illustrated, system **603** generally includes components of LNG regasification system **502** and components of separation system **201.** It should be appreciated that the following discussion is equally applicable to any separation system, including any of separation systems **101, 201, 301, 401.** However, for simplicity, only separation system **201** will be discussed in detail. As with separation system **201,** integrated system **603** may include a dehydration unit **261.** A feed stream **10** (e.g., a sour gas feed stream) may enter the dehydration unit **261** before entering the heat exchanger **600** as feed stream **11.** The dehydration unit **261** dehydrates the feed stream **10** to a dew point sufficiently low to ensure a separate water phase does not form at any point downstream during the rest of the process. The dehydration unit **261** may be any suitable dehydration mechanism, such as a molecular sieve or a glycol dehydration unit. In some embodiments, dehydration unit **261** may be omitted, for example, when feed stream **10** already has a sufficiently low dew point.

Similar to separation system **201,** integrated system **603** includes a heat exchanger **600.** The feed stream **11** enters the heat exchanger **600** before entering the distillation tower **204.** The feed stream **11** is cooled within the heat exchanger **600** to a temperature level suitable for introduction into the distillation tower **204** (e.g., from about -62 °C to about -35 °C (from about -80 °F to about -30 °F), or more particularly about -51 °C (-60 °F)). Upon exiting the heat exchanger **600**, feed stream line **12** may extend to an outer surface of the distillation tower **204** before entering the distillation tower. A cooling fluid stream for heat exchanger **600** is provided by regasification system **502.** Liquid-state LNG (at a temperature of from about -170 °C to about -30 °C, or more particularly about -162 °C) is delivered through line **64** to heat exchanger **600.** The liquid-state LNG in line **64** from storage tank **510** may act as a cooling fluid stream for feed stream **11.** Said another way, feed stream **11** acts as a heat source to help to vaporize the liquid-state LNG in line **64.** Thus, the heat exchanger **600** may also be referred to as, a vaporizer **631.** Liquid-state LNG may be partially converted at vaporizer **631** to gaseous-state LNG. In some embodiments, line **65** returns both liquid-state LNG and gaseous-state LNG to storage tank **510.** In some embodiments, storage tank **510** and/or associated components thereof may utilize any gaseous-state LNG from line **65** as fuel. For example, storage tank **510** may be located on a ship, and gaseous-state LNG from line **65** may be utilized as fuel for the ship's engines. As another example, storage tank **510** may utilize associated pumps, compressors, and/or condensers, and gaseous-state LNG from line **65** may be utilized as fuel for the associated pumps, compressors, and/or condensers.

In some embodiments, liquid-state LNG in lines **64** and **65** may cool an intermediary cooling medium (e.g., ethane, propane, chlorofluorocarbon refrigerant such as R-134A), and the intermediary cooling medium may then act as the cooling fluid in heat exchanger **600.** For example, the intermediary cooling medium may be contained in a closed refrigerant loop having an intermediary heat exchanger between the liquid-state LNG in lines **64** and **65** and the intermediary cooling medium. In some embodiments, the liquid-state LNG in line **64** may be pumped to a delivery pressure before being delivered to heat exchanger/vaporizer **600/631.**

Similar to separation system **201,** integrated system **603** includes line **14** for a vapor stream to exit the upper section **110** of the distillation tower **204.** The line 14 may emanate from an upper part of the upper section **110.** The line **14** may extend from an outer surface of the upper section **110.** From line **14,** the vapor stream enters a heat exchanger **622.** The heat exchanger **622** cools the vapor stream to form a cooled stream, exiting heat exchanger **622** through line **15.** The heat exchanger **622** at least partially condenses the vapor stream. A cooling fluid stream for heat exchanger **622** is provided by regasification system **502.** Liquid-state LNG (at a temperature of from about -170 °C to about -30 °C, or more particularly about -162 °C) is delivered through line **62** to heat exchanger **622.** The liquid-state LNG in line **62** acts as a cooling fluid stream for the vapor stream in line **14.** Said another way, the vapor stream in line **14** acts as a heat source to help to vaporize the liquid-state LNG in line **62.** Thus, the heat exchanger **622** may also be referred to as, a vaporizer **632.** Liquid-state LNG is at least partially converted at vaporizer **632** to gaseous-state LNG. Line **63** conveys both liquid-state LNG and gaseous-state LNG from vaporizer **632** to line **15** to combine with the cooled stream from heat exchanger **622.** In some embodiments (not shown), line **63** conveys both liquid-state LNG and gaseous-state LNG from vaporizer **632** to output product in line **16** to combine with the separated vapor stream from separator **124.**

The combined stream, including the cooled stream from heat exchanger **622** and the liquid-state LNG and gaseous-state LNG from vaporizer **632,** may travel through line **15** to enter a separator **124.** The separator **124** separates the combined stream into a liquid stream and a vapor stream. The separator may be any suitable separator that can separate a combined stream into a liquid stream and a vapor stream, such as a reflux drum. Once separated, the separated vapor stream may exit the separator **124** as output product. The output product may travel through line **16** for subsequent gaseous transport (e.g., through a pipeline) and/or condensation to LNG. Once separated, the separated liquid stream may return to the upper section **110** through line **18** as the reflux. The reflux may travel to the upper section **110** via any suitable mechanism, such as a reflux pump **150** and/or gravity. Note that the reflux of integrated system **603,** unlike that of separation system **201,** may include liquid that originated as LNG from storage tank **510.** In some embodiments, separator **124** and/or associated components thereof may utilize any gaseous-state LNG from line **15** as fuel. For example, separator **124** may utilize associated pumps, compressors, and/or condensers, and gaseous-state LNG from line **15** may be utilized as fuel for the associated pumps (e.g., reflux pump **150**), compressors, and/or condensers.

The output product in line **16** should contain a fractional amount of CO₂ in a specified range (e.g., about 1.5% to about 2.5%, or more particularly about 1.9% to about 2.1%). Heat exchanger/vaporizer **622/632** and optionally separator **124** will act to create a mixture of the vapor stream in line **14** and liquid-state/gaseous-state LNG in line **63** to result in an output product in line **16** having a specified range of fractional amount of CO₂. For example, a set point and/or operating parameters of the distillation tower **204** may be specified to control separation efficiency to affect the amount of CO₂ in the vapor stream in line **14.** As another example, the flowrate of the liquid-state LNG in line **62** may be controlled to affect the amount of CO₂ in the vapor stream in line **14.** A slip stream of LNG may be taken off the storage tank **510,** vaporized, and mixed with the output product in line **16** to dilute the CO₂ content. The claimed techniques may be utilized in various embodiments to affect the fractional amount of CO₂ in the output product in line **16.**

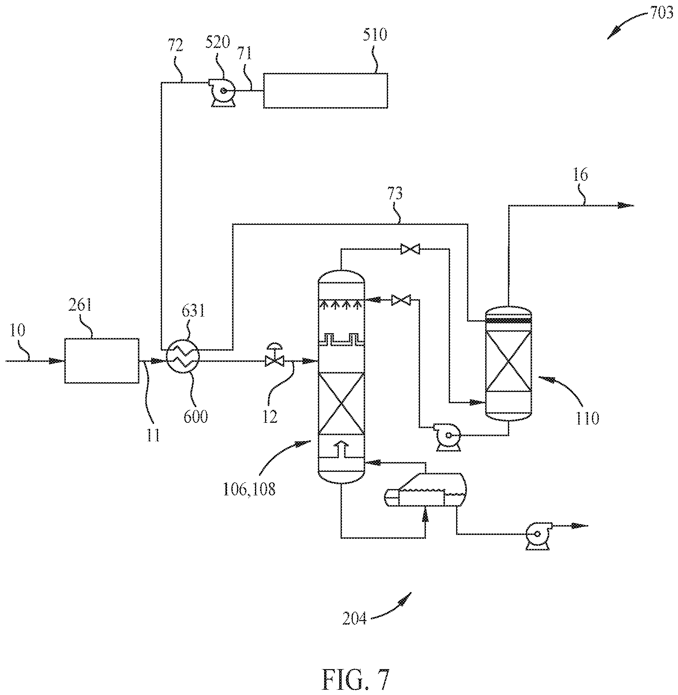

Figure 7 illustrates another exemplary integrated separation and regasification system 703. As with integrated system **603,** integrated system **703** may include a dehydration unit **261.** A feed stream **10** (e.g., a sour gas feed stream) may enter the dehydration unit **261** before entering the heat exchanger **600** as feed stream **11.** The dehydration unit **261** dehydrates the feed stream **10** to a dew point sufficiently low to ensure a separate water phase does not form at any point downstream during the rest of the process. The dehydration unit **261** may be any suitable dehydration mechanism, such as a molecular sieve or a glycol dehydration unit. In some embodiments, dehydration unit **261** may be omitted, for example, when feed stream **10** already has a sufficiently low dew point.

Similar to integrated system **603,** integrated system **703** may include a heat exchanger **600.** The feed stream **11** may enter the heat exchanger **600** before entering the distillation tower **204.** The feed stream **11** may be cooled within the heat exchanger **600** to a temperature level suitable for introduction into the distillation tower **204** (e.g., from about -62 °C to about -35 °C (from about -80 °F to about -30 °F), or more particularly about -51 °C (-60 °F). Upon exiting the heat exchanger **600**, feed stream line **12** may extend to an outer surface of the distillation tower **204** before entering the distillation tower. A cooling fluid stream for heat exchanger **600** may be provided by liquid-state LNG. For example, liquid-state LNG (at a temperature of from about -170 °C to about -30 °C, or more particularly about -162 °C) may be delivered through line **72** from storage tank **510** to heat exchanger **600.** The liquid-state LNG in line **72** may act as a cooling fluid stream for feed stream **11.** Said another way, feed stream **11** may act as a heat source to help to vaporize the liquid-state LNG in line **72.** Thus, the heat exchanger **600** may also function as, and/or be referred to as, a vaporizer **631.** Pump **520** may draw liquid-state LNG from storage tank **510** through line **71.** Pump **520** may then direct the liquid-state LNG to vaporizer **631** through line **72.** Liquid-state LNG may be at least partially converted at vaporizer **631** to gaseous-state LNG. In some embodiments, line **73** conveys both liquid-state LNG and gaseous-state LNG to upper section **110** of distillation tower **204.** LNG from line **73** may help cool the upper section **110** and any fluids therein. For example, LNG from line **73** may cool the vapor stream that rises in the middle controlled freeze zone section **108** and does not form solids or otherwise fall to the bottom of the middle controlled freeze zone section **108.** Moreover, LNG from line **73** may cool the upper section **110** to separate methane from contaminants. In comparison to separation system **201** and/or integrated system **603,** integrated system **703** may utilize only LNG from line **73** to cool upper section **110,** thereby eliminating condenser **122,** heat exchanger **622,** separator **124,** reflux pump **150,** and/or any lines associated therewith. In some embodiments, distillation tower **204** and/or associated components thereof may utilize any gaseous-state LNG from line **73** as fuel. For example, distillation tower **204** may utilize associated pumps, compressors, and/or condensers, and gaseous-state LNG from line **73** may be utilized as fuel for the associated pumps, compressors, and/or condensers.

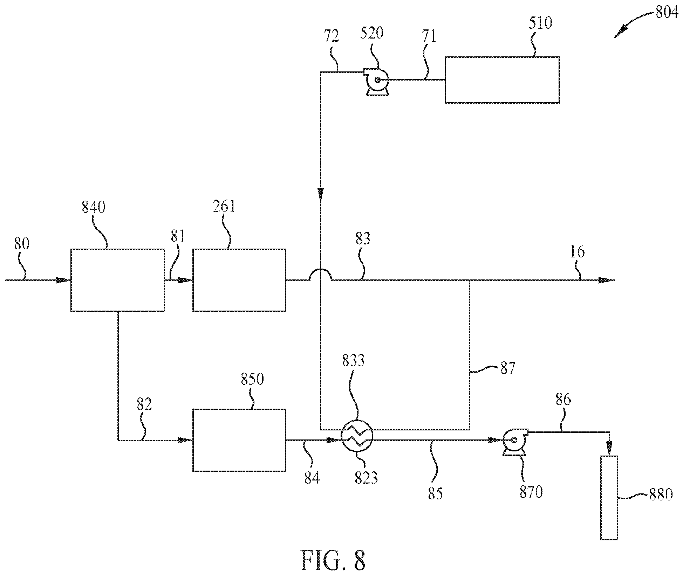

Figure 8 illustrates another exemplary integrated separation and regasification system **804.** As with integrated systems **603** and **703,** integrated system **804** may both separate contaminants in a gas feed stream and regasify LNG. For integrated system **804,** the input gas feed stream **80** may have a CO₂ concentration of about 2% to about 70%. For example, input gas feed stream **80** may be a flue gas (e.g., output of a power plant). As another example, input gas feed stream **80** may be an associated gas with a somewhat lower CO₂ concentration than may be applicable to input feed streams for integrated systems **603** and **703.** A filter system **840** (e.g., including a membrane filter or a solvent filter) may separate feed stream **80** into a natural gas stream **81** and a CO₂-concentrated stream **82.**

Natural gas stream **81** may include water vapor and hydrocarbon components (e.g., ethane, methane). A dehydration unit **261** may dehydrate the natural gas stream **81** to a dew point sufficiently low to ensure a separate water phase does not form at any point downstream. The dehydration unit **261** may be any suitable dehydration mechanism, such as a molecular sieve or a glycol dehydration unit. In some embodiments, dehydration unit **261** may be omitted, for example, when natural gas stream **81** already has a sufficiently low dew point. Dehydrated stream **83** may exit the dehydration unit **261** as output product. The output product may travel through line **16** for subsequent sale to a pipeline and/or condensation to LNG.

It is currently believed that pumping CO₂ in a liquid state may entail about 50% to about 80% less injection horsepower than pumping CO₂ in a gaseous state. Therefore, in preparation for storage and/or transport, CO₂-concentrated stream **82** may be compressed at compressor **850** to form compressed feed stream **84,** and then feed stream **84** may be cooled at heat exchanger **823** to form cooled stream **85.** Cooled stream **85** may include liquid-state CO₂. Heat exchanger **823** may be a condenser. Heat exchanger **823** may output cooled stream **85** at a temperature of about -57 °C (-70 °F) and a pressure of greater than about 80 psia. Liquid CO₂ pump **870** may then pump cooled stream **85** through line **86** to storage and/or transport facility **880** (e.g., an injection well).

A cooling fluid stream for heat exchanger **823** may be provided by liquid-state LNG. For example, liquid-state LNG (at a temperature of from about -170 °C to about -30 °C, or more particularly about -162 °C) may be delivered through line **72** from storage tank **510** to heat exchanger **823.** The liquid-state LNG in line **72** may act as a cooling fluid stream for feed stream **84.** Said another way, feed stream **84** may act as a heat source to help to vaporize the liquid-state LNG in line **72.** Thus, the heat exchanger **823** may also function as, and/or be referred to as, a vaporizer **833.** Pump **520** may draw liquid-state LNG from storage tank **510** through line **71.** Pump **520** may then direct the liquid-state LNG to vaporizer **833** through line **72.** Liquid-state LNG may be at least partially converted at vaporizer **833** to gaseous-state LNG. In some embodiments, line **87** conveys both liquid-state LNG and gaseous-state LNG from vaporizer **833** to line **16** to combine with the dehydrated stream **83.** The combined stream, including the dehydrated stream from dehydration unit **261** and the liquid-state LNG and gaseous-state LNG from vaporizer **833,** may travel through line **16** as output product. The output product may travel through line **16** for subsequent gaseous transport (e.g., through a pipeline) and/or condensation to LNG.

In some embodiments, an integrated separation and regasification system may include a distillation tower that is collocated with a LNG regasification terminal. For example, the cold energy from vaporizing the LNG may be utilized replace refrigeration in the distillation process for separating contaminants (e.g., CO₂, H₂S) from a sour gas feed. In some embodiments, heat exchangers for vaporizing LNG may be shared as cooling components of the controlled freeze zone system. In some embodiments, all independent refrigeration and heat exchangers for the separation system may be eliminated, being replaced by shared heat exchangers. In some embodiments, the integrated system may be located onshore. For example, the integrated system may be located within about 300 km to about 500 km of a production field. As another example, the integrated system may be located within about 300 km to about 500 km of a combustion plant that emits sour gas as waste. In some embodiments, the integrated system may be deployed on an offshore floating vessel. In some embodiments, the integrated system may be configured to move between different CO₂-containing production fields.

Disclosed aspects may be used in hydrocarbon management activities. As used herein, "hydrocarbon management" or "managing hydrocarbons" includes hydrocarbon extraction, hydrocarbon production, hydrocarbon exploration, identifying potential hydrocarbon resources, identifying well locations, determining well injection and/or extraction rates, identifying reservoir connectivity, acquiring, disposing of and/or abandoning hydrocarbon resources, reviewing prior hydrocarbon management decisions, and any other hydrocarbon-related acts or activities. The term "hydrocarbon management" is also used for the injection or storage of hydrocarbons or CO₂, for example the sequestration of CO₂, such as reservoir evaluation, development planning, and reservoir management. The disclosed methodologies and techniques may be used to produce hydrocarbons in a feed stream extracted from, for example, a subsurface region. The feed stream extracted may be processed in the distillation tower **104, 204** and separated into hydrocarbons and contaminants. The separated hydrocarbons may exit the middle controlled freeze zone section **108** or the upper section **110** of the distillation tower. Some or all of the hydrocarbons that exit are produced. Hydrocarbon extraction may be conducted to remove the feed stream from for example, the subsurface region, which may be accomplished by drilling a well using oil well drilling equipment. The equipment and techniques used to drill a well and/or extract the hydrocarbons are well known by those skilled in the relevant art. Other hydrocarbon extraction activities and, more generally, other hydrocarbon management activities, may be performed according to known principles.

The scope of the invention is to be determined only by the appended claims. It is possible that structures and features in the present examples can be altered, rearranged, substituted, deleted, duplicated, combined, or added to each other.

## Claims

1. An integrated system (603), comprising:
a component comprising a cryogenic distillation tower (204) for separating contaminants comprising carbon dioxide from an input feed stream (10);
a liquefied natural gas ("LNG") regasification system (502) comprising a LNG storage tank (510),
a heat exchanger (600),
wherein the heat exchanger (600) is coupled to a first line (12) and to a first LNG line (64),
wherein the first line (12) is coupled to the component for separating contaminants to direct a first feed stream of the first line from the heat exchanger to the component for separating contaminants, and
wherein the heat exchanger (600) is configured to cool the first feed stream of the first line (12), wherein the first LNG line (64) is coupled to the LNG storage tank (510) to direct a LNG stream from the LNG storage tank (510) to the heat exchanger (600) to act as a cooling fluid stream for the first feed stream,
wherein the heat exchanger (600) is configured to function as a vaporizer (631) for the LNG stream, wherein the heat exchanger (600) is configured to heat the LNG stream of the LNG regasification system using the first feed stream as heat source; and
a second heat exchanger (622) coupled to a second line (14) and to a second LNG line (62),
wherein the second line (14) is coupled to the cryogenic distillation tower (204) to direct a second feed stream from the cryogenic distillation tower (204) to the second heat exchanger (622),
wherein the second heat exchanger (622) is configured to cool the second feed stream of the second line (14), wherein the second LNG line (62) is coupled to the LNG storage tank (510) to direct a second LNG stream from the LNG storage tank (510) to the second heat exchanger (622) to act as a cooling fluid stream for the second feed stream,
wherein the second heat exchanger (622) is configured to function as a vaporizer (632) for the second LNG stream, wherein the second heat exchanger (622) is configured to heat the second LNG stream of the LNG regasification system using the second feed stream as heat source; and
wherein lines (15, 63) are provided that combine the second feed stream and the second LNG stream downstream of the second heat exchanger (622).

2. The integrated system of claim 1, wherein the cryogenic distillation tower (204) comprises:
a distillation section (106) permitting vapor to rise upwardly therefrom;
one or more lines for directing the input feed stream into the cryogenic distillation tower, wherein the one or more lines comprise the first line (12);
a controlled freeze zone section (108) situated above the distillation section, the controlled freeze zone constructed and arranged to form a solid from the input feed stream, the controlled freeze zone section including
a spray assembly (129) in an upper section of the controlled freeze zone, and
a melt tray assembly (139) in a lower section of the controlled freeze zone, wherein the melt tray assembly includes:
at least one vapor stream riser (140) that directs the vapor from the distillation section into liquid (130) retained by the melt tray assembly, and
one or more draw-off openings (22) positioned to permit a portion of the liquid retained by the melt tray assembly to exit the controlled freeze zone section;
a tower heat exchanger (172) arranged to heat the portion of the liquid through indirect heat exchange with a heating fluid; and
one or more return inlets that return the portion of the liquid to the melt tray assembly after the portion of the liquid has been heated in the tower heat exchanger.

3. The integrated system of claim 1, further comprising:
a separator, wherein:
output from the vaporizer is directed to the separator (124), and
output from the heat exchanger (622) is directed to the separator; and
a reflux pump (150), wherein:
non-gaseous output from the separator is directed to the reflux pump,
output (18) from the reflux pump is directed to the cryogenic distillation tower (204), and
gaseous output of the separator is directed to an output line (16) as output product.

4. A method, comprising:
separating contaminants from an input feed stream (10) with a component for separating contaminants, wherein:
the separating contaminants comprises cryogenically separating contaminants,
the component for separating contaminants comprises a distillation tower (204), and
the contaminants comprise carbon dioxide;
cooling a first feed stream with a heat exchanger (600), wherein the heat exchanger is coupled to the component for separating contaminants; and
heating a LNG stream of a LNG regasification system (502) comprising a LNG storage tank (510) with the heat exchanger (600), wherein the heat exchanger (600) functions as a vaporizer (631) for the LNG;
cooling a second feed stream with a second heat exchanger (622); and
heating a second LNG stream from the LNG storage tank (510)_with a second vaporizer (632) of the LNG regasification system (502), wherein:
the second heat exchanger is coupled to the distillation tower (204),
the cooling the first feed stream precedes the cryogenically separating the contaminants,
the cryogenically separating the contaminants precedes the cooling the second feed stream, and
the second heat exchanger (622) functions as the second vaporizer (632); and
combining the second feed stream and the second LNG stream downward of the second heat exchanger (622), to create an output product having a specified range of fractional amount of CO₂.

5. The method of claim 4, wherein cryogenically separating the contaminants comprises:
directing the input feed stream (10) into the distillation tower (204);
permitting vapor to rise upwardly from a distillation section (106) of the distillation tower;
forming a solid in a controlled freeze zone section (108) of the distillation tower, the controlled freeze zone section being situated above the distillation section (106), wherein the solid comprises contaminants in the input feed stream;
directing the vapor from the distillation section into liquid (130) retained by a melt tray assembly (139) using at least one vapor stream riser (140);
melting the solid using the liquid retained by the melt tray assembly;
permitting a portion of the liquid retained by the melt tray assembly to exit the controlled freeze zone section;
heating the portion of the liquid through indirect heat exchange with a heating fluid in a tower heat exchanger (172); and
returning the portion of the liquid to the melt tray assembly after the liquid has been heated in the tower heat exchanger.

6. The method of claim 5, further comprising:
separating output from the vaporizer (632) and output from the heat exchanger (622) into a output product stream (16) and a reflux stream (18); and
directing the reflux stream to the cryogenic distillation tower (204), wherein the output product stream comprises a fractional amount of CO₂ in a range of 1.5% to 2.5%.

## Patentansprüche

1. Ein integriertes System (603), umfassend:
eine Komponente, umfassend eine kryogene Destillationskolonne (204), zur Abscheidung von Verunreinigungen, die Kohlendioxid umfassen, aus einem Zuführstrom (10);
ein Wiederverdampfungssystem für verflüssigtes Erdgas ("LNG") (502) mit einem LNG-Speichertank (510),
einen Wärmetauscher (600),
wobei der Wärmetauscher (600) mit einer ersten Leitung (12) und mit einer ersten LNG-Leitung (64) verbunden ist,
wobei die erste Leitung (12) mit der Komponente zur Abscheidung von Verunreinigungen gekoppelt ist, um einen ersten Zuführstrom der ersten Leitung vom Wärmetauscher zu der Komponente zur Abscheidung von Verunreinigungen zu leiten, und
wobei der Wärmetauscher (600) ausgebildet ist, den ersten Zuführstrom der ersten Leitung (12) zu kühlen, wobei die erste LNG-Leitung (64) mit dem LNG-Speichertank (510) gekoppelt ist, um einen LNG-Strom von dem LNG-Speichertank (510) zu dem Wärmetauscher (600) zu leiten, um als Kühlfluidstrom für den ersten Zuführstrom zu wirken,
wobei der Wärmetauscher (600) ausgebildet ist, als Verdampfer (631) für den LNG-Strom zu fungieren, wobei der Wärmetauscher (600) ausgebildet ist, den LNG-Strom der LNG-Wiederverdampfungsanlage unter Verwendung des ersten Zuführstroms als Wärmequelle zu erhitzen; und
einen zweiten Wärmetauscher (622), der mit einer zweiten Leitung (14) und mit einer zweiten LNG-Leitung (62) gekoppelt ist,
wobei die zweite Leitung (14) mit der kryogenen Destillationskolonne (204) gekoppelt ist, um einen zweiten Zuführstrom von der kryogenen Destillationskolonne (204) zu dem zweiten Wärmetauscher (622) zu leiten,
wobei der zweite Wärmetauscher (622) ausgebildet ist, den zweiten Zuführstrom der zweiten Leitung (14) zu kühlen, wobei die zweite LNG-Leitung (62) mit dem LNG-Speichertank (510) gekoppelt ist, um einen zweiten LNG-Strom aus dem LNG-Speichertank (510) zu dem zweiten Wärmetauscher (622) zu leiten, um als Kühlfluidstrom für den zweiten Zuführstrom zu wirken,
wobei der zweite Wärmetauscher (622) ausgebildet ist, als Verdampfer (632) für den zweiten LNG-Strom zu fungieren, wobei der zweite Wärmetauscher (622) ausgebildet ist, den zweiten LNG-Strom des LNG-Wiederverdampfungssystems unter Verwendung des zweiten Zuführstroms als Wärmequelle zu erwärmen; und
wobei Leitungen (15, 63) vorgesehen sind, die den zweiten Zuführstrom und den zweiten LNG-Strom stromabwärts des zweiten Wärmetauschers (622) zusammenführen.

2. Integriertes System nach Anspruch 1, wobei die kryogene Destillationskolonne (204) umfasst:
einen Destillationsabschnitt (106), aus dem Dampf nach oben aufsteigen kann;
eine oder mehrere Leitungen zum Leiten des Zuführstroms in die kryogenen Destillationskolonne, wobei die eine oder mehreren Leitungen die erste Leitung (12) umfassen;
einen kontrollierten Gefrierzonenabschnitt (108), der sich oberhalb des Destillationsabschnitts befindet, wobei die kontrollierte Gefrierzone konstruiert und angeordnet ist, um einen Feststoff aus dem Zufuhrstrom zu bilden, wobei der kontrollierte Gefrierzonenabschnitt umfasst:
eine Sprühvorrichtung (129) in einem oberen Abschnitt der kontrollierten Gefrierzone und
eine Schmelzwannenanordnung (139) in einem unteren Abschnitt der kontrollierten Gefrierzone, wobei die Schmelzwannenanordnung umfasst:
mindestens ein Dampfstromsteigrohr (140), das den Dampf aus dem Destillationsabschnitt in die von der Schmelzwannenanordnung zurückgehaltene Flüssigkeit (130) leitet, und
eine oder mehrere Abzugsöffnungen (22), die so angeordnet sind, dass ein Teil der von der Schmelzwannenanordnung zurückgehaltenen Flüssigkeit aus dem kontrollierten Gefrierzonenabschnitt austreten kann;
einen Wärmetauscherturm (172), der angeordnet ist, den Teil der Flüssigkeit durch indirekten Wärmeaustausch mit einem Heizfluid zu erwärmen; und
einen oder mehrere Rückführeinlässe, die den Teil der Flüssigkeit in die Schmelzwannenanordnung zurückführen, nachdem der Teil der Flüssigkeit im Wärmetauscherturm erhitzt wurde.

3. Integriertes System nach Anspruch 1, das ferner umfasst:
einen Abscheider, wobei:
eine Ausgabe des Verdampfers zum Abscheider (124) geleitet wird, und
eine Ausgabe des Wärmetauschers (622) zum Abscheider geleitet wird; und eine Rückflusspumpe (150), wobei:
die nicht gasförmige Ausgabe des Abscheiders zur Rückflusspumpe geleitet wird,
die Ausgabe (18) der Rückflusspumpe zur kryogenen Destillationskolonne (204) geleitet wird und
die gasförmige Ausgabe des Abscheiders als Ausgabeprodukt in eine Ausgabeleitung (16) geleitet wird.

4. Ein Verfahren, umfassend:
Abscheiden von Verunreinigungen aus einem Zuführstrom (10) mit einer Komponente zur Abscheidung von Verunreinigungen, wobei:
die Abscheidung von Verunreinigungen die kryogene Abscheidung von Verunreinigungen umfasst,
die Komponente zur Abscheidung von Verunreinigungen eine Destillationskolonne (204) umfasst, und
die Verunreinigungen Kohlendioxid umfassen;
Kühlen eines ersten Zuführstroms mit einem Wärmetauscher (600), wobei der Wärmetauscher mit der Komponente zur Abscheidung von Verunreinigungen gekoppelt ist; und
Erhitzen eines LNG-Stroms eines LNG-Wiederverdampfungssystems (502), das einen LNG-Speichertank (510) umfasst, mit dem Wärmetauscher (600), wobei der Wärmetauscher (600) als Verdampfer (631) für das LNG fungiert;
Kühlen eines zweiten Zuführstroms mit einem zweiten Wärmetauscher (622); und
Erhitzen eines zweiten LNG-Stroms aus dem LNG-Speichertank (510) mit einem zweiten Verdampfer (632) des LNG-Wiederverdampfungssystems (502), wobei:
der zweite Wärmetauscher mit der Destillationskolonne (204) verbunden ist,
die Kühlung des ersten Zuführstroms der kryogenen Abscheidung der Verunreinigungen vorausgeht,
die kryogene Abscheidung der Verunreinigungen der Kühlung des zweiten Zuführstroms vorausgeht, und
der zweite Wärmetauscher (622) als zweiter Verdampfer (632) fungiert; und
Kombinieren des zweiten Zuführstroms und des zweiten LNG-Stroms flussabwärts des zweiten Wärmetauschers (622), um ein Ausgabeprodukt zu erzeugen, das einen bestimmten Bereich des CO-Anteils aufweist.

5. Verfahren nach Anspruch 4, wobei die kryogene Abscheidung der Verunreinigungen umfasst:
Leiten des Zuführstroms (10) in die Destillationskolonne (204);
Ermöglichen, dass der Dampf aus einem Destillationsabschnitt (106) der Destillationskolonne nach oben steigt;
Bilden eines Feststoffs in einem kontrollierten Gefrierzonenabschnitt (108) der Destillationskolonne, wobei der kontrollierte Gefrierzonenabschnitt oberhalb des Destillationsabschnitts (106) angeordnet ist, wobei der Feststoff Verunreinigungen im Zuführstrom umfasst;
Leiten des Dampfes aus dem Destillationsabschnitt in eine Flüssigkeit (130), die von einer Schmelzwannenanordnung (139) zurückgehalten wird, unter Verwendung mindestens eines Dampfstromsteigrohrs (140);
Schmelzen des Feststoffs unter Verwendung der von der Schmelzwannenanordnung zurückgehaltenen Flüssigkeit;
Ermöglichung des Austritts eines Teils der von der Schmelzwannenanordnung zurückgehaltenen Flüssigkeit aus dem kontrollierten Gefrierzonenabschnitt;
Erhitzen des Teils der Flüssigkeit durch indirekten Wärmeaustausch mit einem Heizfluid in einem Wärmetauscherturm (172); und
Rückführen des Flüssigkeitsteils in die Schmelzwannenanordnung, nachdem die Flüssigkeit im Wärmetauscherturm erhitzt worden ist.

6. Verfahren nach Anspruch 5, ferner umfassend:
Abscheiden der Ausgabe des Verdampfers (632) und der Ausgabe des Wärmetauschers (622) in einen Ausgabeproduktstrom (16) und einen Rückflussstrom (18); und
Leiten des Rückflussstroms in die kryogene Destillationskolonne (204), wobei der Ausgabeproduktstrom einen Anteil von CO₂ in einem Bereich von 1,5 % bis 2,5 % umfasst.

## Revendications

1. Système intégré (603), comprenant :
une composante comprenant une tour de distillation cryogénique (204) servant à séparer des contaminants comprenant du dioxyde de carbone d'un courant d'alimentation d'entrée (10) ;
un système de regazéification de gaz naturel liquéfié (« GNL ») (502) comprenant une cuve de stockage de GNL (510) ;
un échangeur de chaleur (600),
l'échangeur de chaleur (600) étant couplé à une première conduite (12) et à une première conduite de GNL (64),
la première conduite (12) étant couplée à la composante servant à séparer des contaminants pour acheminer un premier courant d'alimentation de la première conduite depuis l'échangeur de chaleur jusqu'à la composante servant à séparer des contaminants, et
l'échangeur de chaleur (600) étant configuré pour refroidir le premier courant d'alimentation de la première conduite (12), la première conduite de GNL (64) étant couplée à la cuve de stockage de GNL (510) pour acheminer un courant de GNL depuis la cuve de stockage de GNL (510) jusqu'à l'échangeur de chaleur (600) pour qu'il agisse comme un courant de fluide de refroidissement pour le premier courant d'alimentation,
l'échangeur de chaleur (600) étant configuré pour fonctionner comme un vaporiseur (631) pour le courant de GNL, l'échangeur de chaleur (600) étant configuré pour chauffer le courant de GNL du système de regazéification de GNL en utilisant le premier courant d'alimentation comme source de chaleur ; et
un deuxième échangeur de chaleur (622) couplé à une deuxième conduite (14) et à une deuxième conduite de GNL (62),
la deuxième conduite (14) étant couplée à la tour de distillation cryogénique (204) pour acheminer un deuxième courant d'alimentation depuis la tour de distillation cryogénique (204) jusqu'au deuxième échangeur de chaleur (622),
le deuxième échangeur de chaleur (622) étant configuré pour refroidir le deuxième courant d'alimentation de la deuxième conduite (14), la deuxième conduite de GNL (62) étant couplée à la cuve de stockage de GNL (510) pour acheminer un deuxième courant de GNL depuis la cuve de stockage de GNL (510) jusqu'au deuxième échangeur de chaleur (622) pour qu'il agisse comme un courant de fluide de refroidissement pour le deuxième courant d'alimentation,
le deuxième échangeur de chaleur (622) étant configuré pour fonctionner comme un vaporiseur (632) pour le deuxième courant de GNL, le deuxième échangeur de chaleur (622) étant configuré pour chauffer le deuxième courant de GNL du système de regazéification de GNL en utilisant le deuxième courant d'alimentation comme source de chaleur ; et
dans lequel sont prévues des conduites (15, 63) qui combinent le deuxième courant d'alimentation et le deuxième courant de GNL en aval du deuxième échangeur de chaleur (622).

2. Système intégré selon la revendication 1, dans lequel la tour de distillation cryogénique (204) comprend :
une section de distillation (106) permettant à la vapeur de s'élever depuis celle-ci ;
une ou plusieurs conduites pour acheminer le courant d'alimentation d'entrée jusqu'à l'intérieur de la tour de distillation cryogénique, la ou les conduites comprenant la première conduite (12) ;
une section de zone de congélation régulée (108) située au-dessus de la section de distillation, la zone de congélation régulée étant construite et agencée pour former un solide à partir du courant d'alimentation d'entrée, la section de zone de congélation régulée comportant
un ensemble de pulvérisation (129) dans une section supérieure de la zone de congélation régulée, et
un ensemble plateau de fusion (139) dans une section inférieure de la zone de congélation régulée, l'ensemble plateau de fusion comportant :
au moins une cheminée à courant de vapeur (140) qui achemine la vapeur provenant de la section de distillation à l'intérieur d'un liquide (130) retenu par l'ensemble plateau de fusion, et
une ou plusieurs ouvertures de soutirage (22) positionnées pour permettre à une partie du liquide retenu par l'ensemble plateau de fusion de sortir de la section de zone de congélation régulée ;
un échangeur de chaleur de tour (172) agencé pour chauffer la partie du liquide par échange de chaleur indirect avec un fluide de chauffage ; et
une ou plusieurs entrées de retour qui font retourner la partie du liquide à l'ensemble plateau de fusion après que la partie du liquide a été chauffée dans l'échangeur de chaleur de tour.

3. Système intégré selon la revendication 1, comprenant en outre :
un séparateur, dans lequel :
la sortie du vaporiseur est acheminée jusqu'au séparateur (124), et
la sortie de l'échangeur de chaleur (622) est acheminée jusqu'au séparateur; et
une pompe de reflux (150), dans lequel :
la sortie non gazeuse du séparateur est acheminée jusqu'à la pompe de reflux,
la sortie (18) de la pompe de reflux est acheminée jusqu'à la tour de distillation cryogénique (204), et
la sortie gazeuse du séparateur est acheminée jusqu'à une conduite de sortie (16) comme produit de sortie.

4. Procédé, comprenant :
la séparation de contaminants d'un courant d'alimentation d'entrée (10) avec une composante servant à séparer des contaminants, dans lequel :
la séparation de contaminants comprend la séparation cryogénique de contaminants,
la composante servant à séparer des contaminants comprend une tour de distillation (204), et
les contaminants comprennent du dioxyde de carbone ;
le refroidissement d'un premier courant d'alimentation avec un échangeur de chaleur (600), l'échangeur de chaleur étant couplé à la composante servant à séparer des contaminants ; et
le chauffage d'un courant de GNL d'un système de regazéification de GNL (502) comprenant une cuve de stockage de GNL (510) avec l'échangeur de chaleur (600), l'échangeur de chaleur (600) fonctionnant comme un vaporiseur (631) pour le GNL ;
le refroidissement d'un deuxième courant d'alimentation avec un deuxième échangeur de chaleur (622) ; et
le chauffage d'un deuxième courant de GNL provenant de la cuve de stockage de GNL (510) avec un deuxième vaporiseur (632) du système de regazéification de GNL (502), dans lequel :
le deuxième échangeur de chaleur est couplé à la tour de distillation (204),
le refroidissement du premier courant d'alimentation précède la séparation cryogénique des contaminants,
la séparation cryogénique des contaminants précède le refroidissement du deuxième courant d'alimentation, et
le deuxième échangeur de chaleur (622) fonctionne comme le deuxième vaporiseur (632) ; et
la combinaison du deuxième courant d'alimentation et du deuxième courant de GNL en aval du deuxième échangeur de chaleur (622), pour créer un produit de sortie ayant une plage spécifiée de quantité fractionnaire de CO₂.

5. Procédé selon la revendication 4, dans lequel la séparation cryogénique des contaminants comprend :
l'acheminement du courant d'alimentation d'entrée (10) jusqu'à l'intérieur de la tour de distillation (204) ;
l'opération consistant à permettre à la vapeur de s'élever depuis une section de distillation (106) de la tour de distillation ;
la formation d'un solide dans une section de zone de congélation régulée (108) de la tour de distillation, la section de zone de congélation régulée étant située au-dessus de la section de distillation (106), le solide comprenant des contaminants dans le courant d'alimentation d'entrée ;
l'acheminement de la vapeur provenant de la section de distillation à l'intérieur d'un liquide (130) retenu par un ensemble plateau de fusion (139) au moyen d'au moins une cheminée à courant de vapeur (140) ;
la fusion du solide au moyen du liquide retenu par l'ensemble plateau de fusion ;
l'opération consistant à permettre à une partie du liquide retenu par l'ensemble plateau de fusion de sortir de la section de zone de congélation régulée ;
le chauffage de la partie du liquide par échange de chaleur indirect avec un fluide de chauffage dans un échangeur de chaleur de tour (172) ; et
le retour de la partie du liquide à l'ensemble plateau de fusion après que le liquide a été chauffé dans l'échangeur de chaleur de tour.

6. Procédé selon la revendication 5, comprenant en outre :
la séparation de la sortie du vaporiseur (632) et de la sortie de l'échangeur de chaleur (622) en un courant de produit de sortie (16) et un courant de reflux (18) ; et
l'acheminement du courant de reflux jusqu'à la tour de distillation cryogénique (204), dans lequel le courant de produit de sortie comprend une quantité fractionnaire de CO₂ dans une plage de 1,5 % à 2,5 %.
